# EUROPÄISCHE PATENTSCHRIFT

(11) **EP 2 219 893 B1**
(45) Veröffentlichungstag und Bekanntmachung des Hinweises auf die Patenterteilung: **01.08.2012**
(21) Anmeldenummer: 08858369.5
(22) Anmeldetag: 15.10.2008
(51) Int. Cl.: B60G 17/02, B60G 15/06, F16F 9/58, B60G 11/54, B60G 7/04, F16F 13/00

(54) **HÖHENVERSTELLUNG AN EINER RADAUFHÄNGUNG FÜR KRAFTFAHRZEUGE**
HEIGHT ADJUSTMENT ON WHEEL SUSPENSION FOR MOTOR VEHICLES
REGLAGE EN HAUTEUR SUR UNE SUSPENSION DE ROUE POUR VEHICULES AUTOMOBILES

(30) Priorität: 07.12.2007 DE 102007059140
(43) Veröffentlichungstag der Anmeldung: 25.08.2010
(73) Patentinhaber: Audi AG, 85045 Ingolstadt (DE)
(72) Erfinder: MICHEL, Wilfried, 93339 Riedenburg (DE)
(74) Vertreter: Asch, Konrad
(86) Internationale Anmeldenummer: PCT/EP2008/008708
(87) Internationale Veröffentlichungsnummer: WO 2009/071149

(56) Entgegenhaltungen:
- EP-A- 1 953 013
- WO-A-2006/131343
- DE-A1- 3 223 195
- DE-A1- 3 502 579
- DE-A1- 10 250 805
- DE-A1- 19 935 865
- FR-A- 2 695 875
- JP-A- 11 108 100
- JP-A- 2001 080 336
- US-A- 5 961 106

## Beschreibung

Die Erfindung betrifft eine Höhenverstellung an einer Radaufhängung für Kraftfahrzeuge mit einem an dessen Aufbau angelenkten Kolben eines Stoßdämpfers, dem eine Schraubenfeder zugeordnet ist, die zwischen zwei den Ein- und Ausfederweg im Bezug auf ein Normalniveau bestimmenden in ihrem Wirkabstand veränderbaren Federtellern eingespannt ist.

Eine solche Höhenverstellung weist, wie z. B. die DE 35 02 579 A1 zeigt, ein aus einem Stoßdämpfer und einer Schraubenfeder gebildetes höhenverstellbares Federbein auf, dessen zwischen zwei Federtellern eingespannte Schraubenfeder mittels einer hydraulisch zu betätigenden Verstellvorrichtung in ihrem freien Federweg ausgehend von einem Normalniveau durch Verschieben des oberen, an einer koaxial zum Stoßdämpfer liegenden zylindrischen Hülse befestigten, Federtellers verstellbar ist. Der Stoßdämpfer ist mit seinem Kolben am Aufbau des Kraftfahrzeuges festgelegt und trägt an seinem äußeren Zylindermantel den radseitigen lagefesten Federteller.

Ferner zeigt die DE 102 50 805 B4 ein justierbares Federbein mit einer in Stoßrichtung wirkenden Druckfeder und einem in Stoßrichtung wirkenden hydraulischen Teleskopschwingungsdämpfer mit einem Kolben-Zylinder-Aggregat, an dem die Druckfeder mittels einer Federaufnahme aufgenommen ist und wobei die Länge des Federbeins durch Verschieben der Federaufnahme an dem Kolben-Zylinder-Aggregat in Stoßrichtung justierbar ist. Hierzu weist das Kolben-Zylinder-Aggregat ein Außengewinde und die Federaufnahme ein hierin eingreifendes Innengewinde auf, so dass die Federaufnahme durch Verdrehen um das Kolben-Zylinder-Aggregat in dessen axialer Richtung verschiebbar ist.

Eine weitere, gattungsgemäße Höhenverstellung an einer Radaufhängung für Kraftfahrzeuge ist in der WO 2006/131343 A1 offenbart. Wie insbesondere aus Fig. 1 ersichtlich, ist hierbei dem aufbauseitigem Ende des Stoßdämpfers eine den freien Federweg der Tragfeder beeinflussende Kappe zugeordnet, welche gleichzeitig mit dem unteren Federteller verstellbar ausgebildet ist.

Die bekannten, zwischen zwei Endlagen variabel einstellbaren Höhenverstellungen ermöglichen aus der Stellung "Normalniveau" einen vorgegebenen bestimmten Einfeder- und Ausfederweg für die vorhandene Schraubenfeder. Der Einfederungsweg wird dabei von einem Anschlagpuffer, der Ausfederweg durch den Kolben im Stoßdämpfer begrenzt. Die Größe solcher Anordnungen ist durch den engen Bauraum im Kraftfahrzeug begrenzt. Dies bedingt Zielkonflikte für die Ausbildung einer solchen Höhenverstellung, da die Schraubenfeder nicht zu kurz sein darf, wegen der Gefahr des Abhebens der Schraubenfeder vom Federteller im ausgefederten Zustand bei Tiefniveau, eine Restvorspannkraft von ca. 500 N muss aber vorhanden sein. Auch darf die Schraubenfeder die zulässigen Spannungen in keinem Betriebspunkt überschreiten und darf nicht zu lang sein, kann also nur eine begrenzte Anzahl von Windungen aufweisen, damit bei der Stellung "Hochniveau" und voll eingefedert keine Windungsberührungen stattfinden. Es muss also in exakt dieser Stellung noch eine genügend große Windungsluft vorhanden sein.

Um diesen Forderungen nachkommen zu können, wird nach dem Stand der Technik der Federweg der Schraubenfeder weit eingeschränkt. Für den kritischen Fall "voller Einfederweg bei Hochniveau" ist dieser Kompromiss zu akzeptieren, denn ist das Federbein auf "Hochniveau" eingestellt, so bewegt sich das Fahrzeug möglicherweise im Gelände. In diesem Fahrzustand ist es natürlich nicht erwünscht, dass der volle Einfederweg zur Verfügung steht. Nachteilig ist jedoch, dass in den Stellungen "Normalniveau" und "Tiefniveau" der Federweg um den gleichen Betrag eingeschränkt ist, als wie bei der Stellung "Hochniveau", so dass definitiv Federweg verloren geht.

Hier setzt nun die Erfindung ein, deren Aufgabe es ist, diese Nachteile zu beheben.

Ausgehend von der eingangs genannten Höhenverstellung ist diese Aufgabe gemäß der Erfindung nach den Merkmalen des Patentanspruchs 1 gelöst.

Weitere Merkmale der Erfindung ergeben sich aus den Unteransprüchen.

Die erfindungsgemäße Ausbildung zur axialen Lageveränderung sowohl des Verstellfedertellers als auch der den Federweg der Schraubenfeder begrenzenden Stoßdämpferkappe ermöglicht eine Vergrößerung der Ein- und Ausfederwege der zugeordneten Schraubenfeder in jeder der jeweiligen Höheneinstelllage des Federbeins bezogen auf das Normalniveau. Hieraus ergeben sich folgende Vorteile: Bei Verstellung des Verstellfedertellers um den gleichen Betrag wie der der Kappe erfolgt eine gewünschte Federwegeinschränkung bei Hochniveau, bei "Normalniveau" entspricht die Situation dem Federweg wie ohne Niveauregulierung und bei "Tiefniveau" erfolgt die Einfederung etwas größer, was nicht störend ist, denn die Lage "Tiefniveau" wird nur auf der Autobahn gefahren und bei dieser ist geringe Bodenfreiheit erlaubt. Bei Einstellung auf "Normalniveau" entspricht der Einfederweg desjenigen ohne Niveauregulierung. Wird von hier aus zum "Hochniveau" übergegangen, bleibt der Verstellfederteller relativ zur Kappe zurück, so dass eine minimale Federwegeinschränkung erfolgt; die Schraubenfeder wird beim Einfedern etwas stärker zusammengedrückt als bei "Normalniveau". Wird zum "Tiefniveau" übergegangen, bleibt der Verstellfederteller relativ zur Kappe zurück, woraus ein gewünschter früherer Einsatz der Schraubenfeder erfolgt. Dieser Wirkungsmechanismus ist vorbestimmbar durch entsprechende Wahl der Gewindesteigungen der auf den Zylinder des Stoßdämpfers aufgeschraubten, als Anschlag wirkenden Dämpferkappe und dem als Stellvorrichtung dienenden Kugelgewindetrieb für den Verstellteller, die miteinander in Wirkverbindung stehen. Mit der erfindungsgemäßen Ausbildung wird also eine Niveauverstellung eines Straßenfahrzeuges durch Fußpunktverstellung der Schraubenfeder ohne den Nachteil einer Federwegseinschränkung erreicht.

Die Erfindung ist nachfolgend an Hand eines in der Zeichnung mehr oder minder schematisch im Schnitt dargestellten Ausführungsbeispiels einer Höhenverstellung beschrieben. Es zeigen
- Fig. 1: das Federbein nach der Erfindung und

- Fig. 2: die erforderlich werdenden Federwegbegrenzungen eines Federbeins bei Tief-, Hoch- und Normalniveau

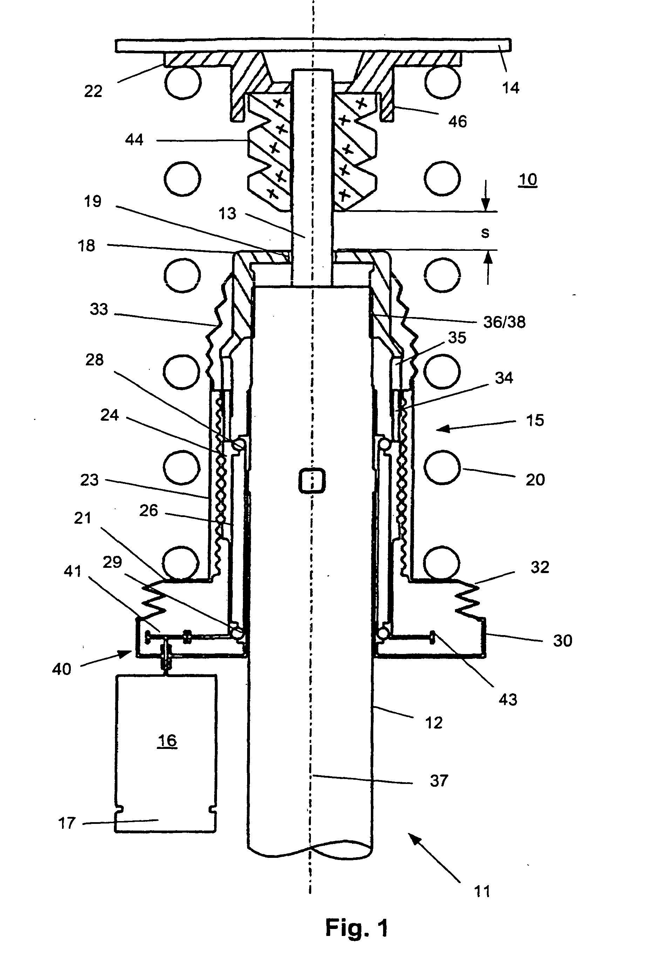

Wie die Fig. 1 zeigt, umfasst die insgesamt mit 10 bezeichnete Höhenverstellung einen Stoßdämpfer 11 mit Zylinder 12 und Kolbenstange 13, einen koaxial zum Zylinder angeordneten Kugelgewindetrieb 15 für das axiale Verschieben eines damit verbundenen Federtellers 21 sowie eine Stoßdämpferkappe 18, die über eine Gewindeverbindung 36/38 mit der zugewandten Stirnseite des Zylinders 12 axial verschieblich verbunden ist. Über einen Motorantrieb 16 mit nicht näher dargestellter Bremse und Winkelkodierer 17 kann der Kugelgewindetrieb 15 und damit der Federteller 21 in Bezug auf die Symmetrieachse 37 des Stoßdämpfers axial verschoben werden. Mit 14 ist der schematisch dargestellte Fahrzeugaufbau bezeichnet.

Die dem Zylinder 12 zugeordnete, im Querschnitt etwa napfförmig ausgebildete Kappe 18 weist eine zentrische Öffnung 19 für den freien Durchtritt der Kolbenstange 13 auf. Eine koaxiale Schraubenfeder 20, die mit ihrer oberen Windung an der Unterkante eines dem Aufbau zugeordneten feststehenden Federtellers 22 und mit ihrer unteren Windung an dem verstellbaren Federteller 21 aufliegt umgibt den Stoßdämpferzylinder 12. Der Federteller 21 ist dem Kugelgewindetrieb 15 zugeordnet und mit der unteren Stirnseite eines eine Zylinderhülse darstellenden stillstehenden Mutterteils 23 des Kugelgewindetriebs 15 verbunden. Der Kugelgewindetrieb 15 umfast ferner einen inneren, als drehbares Spindelteil ausgebildeten koaxialen Zylinder 24; die einander zugewandten Seiten von Mutter- und Spindelteil nehmen in entsprechenden Ausnehmungen die Kugeln des Kugelgewindetriebes auf. Mittels eines Stellergehäuses 26 ist der Kugelgewindetrieb 15 auf dem Zylinder 12 lagefest gehalten. Das Stellergehäuse weist hierzu Lagerstellen 28, 29 für die drehbare Lagerung des Spindelteils 24 auf und trägt einen gehäuseartigen Fortsatz 30 an der Stirnseite. Über an diesen und am Mutterteil 23 angelenkte Dichtmanschetten 32, 33 ist der Kugelgewindetrieb 15 gegenüber äußeren Einflüssen abgedichtet.

Das drehbare Spindelteil 24 greift mit einem stirnseitigen, als Ringsteg 34 ausgebildeten Klauenabschnitt in einen damit korrespondierenden Ringschlitz 35 der Kappe 18 ein, so dass Ringsteg 34 und Ringschlitz 35 eine Klauenkupplung bilden, über die bei einer Drehbewegung des Kugelgewindetriebs 15 die Kappe 18 ebenfalls gedreht wird. Da diese über das an ihrer Innenmantelfläche befindliches Gewinde 36 mit dem korrespondierenden Gewinde 38 auf dem Zylinder 12 aufgeschraubt ist, kann diese bei ihrer Drehbewegung in Bezug auf die Symmetrieachse 37 ebenfalls axial bewegt werden. Das Gewinde der Kappe 18 ist also ein Muttergewinde und das Gewinde des Zylinders 12 ist ein Bolzengewinde, so dass durch entsprechende Wahl der Steigungen dieser Gewinde die Kappe 18 um vorbestimmbare Beträge axial verschoben werden kann.

Das radseitige Ende des koaxialen Spindelteiles 24 ist in nicht näher dargestellter Weise mit dem Antriebsmotor 16 verbunden, der mittels eines zugehörigen Zahnradgetriebes 40 zum Verstellen des Verstellfedertellers 21 über den Kugelgewindetrieb 15 dient. Dieses Zahnradgetriebe umfasst ein Ritzels 41, das mit einem an der unteren Stirnseite des Spindelteils 24 des Kugelgewindetriebes verbundenes Zahnrad 43 eingreift.

Die mit ihrem freien Ende durch die zentrische Öffnung 19 der Kappe 18 ragende Kolbenstange 13 ist von einem als Zusatzfeder 44 dienenden elastomeren Anschlagpuffer umgeben, der von dem aufbauseitigen Federteller 22 mittels einer Ausnehmung 46 gehalten ist.

Der Abstand "s" zwischen Anschlagpuffer (Zusatzfeder 44) und zugewandter Stirnseite der Kappe 18 ist über den Kugelgewindetrieb 15 und über den damit in Wirkverbindung (Klauenkupplung 34) stehenden Gewindetrieb 36, 38 veränderbar.

Bei einem Verstellvorgang über den Motor 16 und die Getriebeverbindung 40 wird das in den Lagern 28, 29 drehbar gehaltene Spindelteil 24 des Kugelgetriebes 15 um die Symmetrieachse 37 verdreht, so dass über die in den Kugellaufbahnen befindlichen Kugeln das Mutterteil 23 des Kugelgewindetriebes und damit der untere Federteller 21 in seiner axialen Lage verändert wird. Gleichzeitig wird über die Klauenkupplung 34, 35 die Drehbewegung des Spindelteils 24 auf die Kappe 18 übertragen, die sich infolge der Gewindeverbindung 36, 38 relativ zu dem Zylinder 12 in ihrer Lage ebenfalls axial verändert. Damit werden sowohl der untere Federteller 21 als auch die Kappe 18 im Ausmaß der gewählten Gewindesteigungen axial in ihrer Lage verschoben. Mit einer Verstellung des verstellbaren Federtellers wird also gleichzeitig auch der Abstand "s" der Kappe 18 zur Zusatzfeder 44 axial in einem jeweils vorbestimmten Ausmaß verändert.

Die Steigung der Gewindeverbindung zwischen Kappe 18 und Zylinder 12 bestimmt hierbei den axialen Verstellweg der Kappe 18. Durch die Wahl der Anordnung von Kugelgewindetrieb und Gewindeverbindung 36, 38 zwischen Kappe und Zylinder gelingt es, die Kappe 18 gleichzeitig mit dem Verstellfederteller 21 zu verstellen und damit den freien Federweg für das Ein- und Ausfedern der Schraubenfeder 20 zu verändern. Das Steigungsverhältnis von Kugelgewindetrieb und Kappengewinde beträgt in der Regel 1:1. Zur Erzielung von weiteren Effekten der Relativbewegungen von Dämpferklappe 18 und Verstellfederteller 21 können die Steigungsverhältnisse von Kugelgewindetrieb und Kappengewinde (36, 38) vom Verhältnis 1:1 auch abweichen.

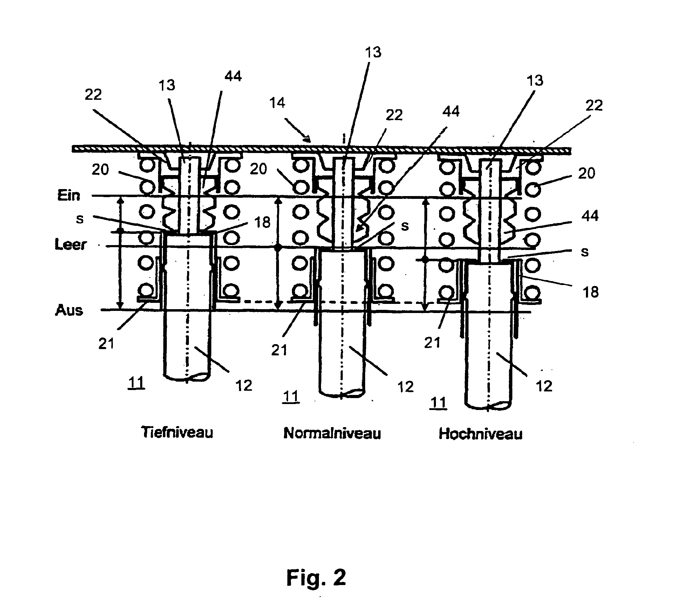

Auf diese Weise können die eingangs erläuterten Probleme der Bemessung der Federwege für das Ein- und Ausfedern des Federbeines nach Fig. 2 für die Stellungen Tief-, Normal- und Hochniveau des zugehörigen Fahrzeuges gelöst werden, wie dies die Fig. 1 zeigt. In Übereinstimmung mit Fig. 1 sind in Fig. 2 einander entsprechende Teile mit gleichen Bezugsziffern versehen. Aus Fig. 1 ist ersichtlich, dass Anschlagkräfte im oberen Anschlag - das ist der Federteller 22 - über den Anschlagpuffer - Zusatzfeder 44 - in die Kappe 18 eingeleitet werden und daher keinesfalls auf die eigentliche Verstelleinheit, also den empfindlichen Kugelgewindetrieb 15 wirken. Die verstellbare Kappe 18 stützt sich unmittelbar am Stoßdämpfer ab.

Wie Fig. 2 zeigt, ergeben sich folgende Betriebssituationen:
a) Steigung Gewindespindel Verstellfederteller = Steigung Dämpferkappe
   => Dämpferkappe wird immer um den gleichen Betrag verstellt wie der Verstellfederteller. Es erfolgt eine (gewünschte) Federwegseinschränkung bei Hochniveau, bei Normalniveau entspricht die Situation dem Federweg wie ohne Niveauregulierung und bei Tiefniveau radbezogene Einfederung etwas mehr, was nicht stört, denn Tiefniveau wird nur auf der Autobahn gefahren und bei dieser ist geringe Bodenfreiheit erlaubt.
b) Steigung Gewindespindel Verstellfederteller > Steigung Dämpferkappe
   => Normalniveau: Normaler Einfederweg wie ohne Niveauregulierung, dies ist die Basisauslegung.
   => Hochniveau: Dämpferkappe bleibt relativ zum Verstellfederteller zurück, daraus resultiert eine minimale Federwegseinschränkung, die Feder wird beim Einfedern etwas stärker zusammengedrückt als bei Normalniveau.
   => Tiefniveau: Dämpferkappe bleibt relativ zum Verstellfederteller zurück, daraus resultiert ein gewünschter früherer Einsatz der Zusatzfeder bei Tiefniveau.
c) Steigung Gewindespiel Verstellfederteller < Steigung Dämpferkappe
   => Normalniveau: Normaler Einfederweg wie ohne Niveauregulierung, entsprechend der Basisauslegung.
   => Hochniveau: Dämpferkappe eilt dem Verstellfederteller relativ voraus, daraus resultiert eine etwas größere Federwegseinschränkung als im Fall a), die Feder wird beim Einfedern etwas weniger zusammengedrückt als bei Normalniveau.
   => Tiefniveau: Dämpferkappe eilt dem Verstellfederteller relativ voraus, daraus resultiert ein späterer Einsatz der Zusatzfeder bei Tiefniveau.

Damit wird die erforderliche Anpassung der Federwege an die Betriebssituationen Tief-, Normal- und Hochniveau und damit die gewünschte Vergrößerung der Ein- und Ausfederwege der Schraubenfeder in der jeweiligen Höheneinstelllage der Radaufhängung in Bezug auf das Normalniveau erreicht.

### Bezugszeichenliste

- 10: Höhenverstellung
- 11: Stoßdämpfer
- 12: Zylinder
- 13: Kolben
- 14: Fahrzeugaufbau
- 15: Kugelgewindetrieb
- 16: Antriebsmotor
- 17: Winkelkodierer
- 18: Kappe (Dämpferkappe)
- 19: Zentrische Öffnung
- 20: Koaxiale Schraubenfeder
- 21: Verstellfederteller
- 22: Fester Federteller
- 23: Mutterteil
- 24: Koaxiales Spindelteil
- 26: Stellergehäuse
- 28: Lagerstelle
- 29: Lagerstelle
- 30: Gehäuseartiger Fortsatz
- 32: Dichtmanschette
- 33: Dichtmanschette
- 34: Ringsteg (Klauenabschnitt)
- 35: Ringschlitz
- 36: Innengewinde (Kappe 18)

- 37: Symmetrieachse
- 38: Korrespondierendes Bolzengewinde
- 40: Zahnradgetriebe
- 41: Antriebsritzel
- 43: Zahnrad
- 44: Zusatzfeder (Anschlagpuffer)
- 46: Ausnehmung Federteller 22

## Patentansprüche

1. Höhenverstellung (10) an einer Radaufhängung für Kraftfahrzeuge, mit einem mit dessen Aufbau in Wirkverbindung stehenden, eine Kolbenstange (13) aufweisenden Stoßdämpfer (11), dem eine Schraubenfeder (20) koaxial zugeordnet ist, die zwischen zwei den Ein- und Ausfederweg in Bezug auf ein Normalniveau bestimmenden, in ihrem Wirkabstand veränderbaren Federtellern (21, 22) eingespannt ist und mit einem dem Stoßdämpfer (11) zugeordneten Anschlagpuffer (44), wobei das aufbauseitige Ende des Stoßdämpfers (11) eine den freien Federweg (s) der Schraubenfeder (20) beeinflussender Stoßdämpfer-Kappe (18) zugeordnet ist, die gleichzeitig mit dem Verstellfederteller (21) verstellbar ausgebildet ist, **dadurch gekennzeichnet, dass** der Verstellfederteller (21) mittels eines motorgetriebenen Kugelgewindetriebes (15) und die Stoßdämpferkappe (18) mittels einer Gewindeverbindung (36, 38) zwischen Zylinder (12) des Stoßdämpfers (11) und Kappe (18) verstellbar angeordnet sowie miteinander über eine Klauenkupplung (34, 35) getrieblich verbunden sind.

2. Höhenverstellung nach Anspruch 1, **dadurch gekennzeichnet, dass** die zwischen Kappe (18) und Spindelteil (24) des Kugelgewindetriebs (15) angeordnete Klauenkupplung als Rohrschlitz (35) ausgebildet ist, in den das als Ringsteg (34) ausgebildete zugewandte Ende des Spindelteiles (24) des Kugelgewindetriebs (15) eingreift.

3. Höhenverstellung nach den Ansprüchen 1 und 2, **dadurch gekennzeichnet, dass** der Anschlagpuffer (44) als die Kolbenstange (13) umgebende elastomere Zusatzfeder ausgebildet ist, die in einer Ausnehmung (46) des feststehenden Federtellers (22) gehalten ist.

4. Höhenverstellung nach den Ansprüchen 1 bis 3, **dadurch gekennzeichnet, dass** der Verstellfederteller (21) dem Mutterteil (23) und der Spindelteil (24) des Kugelgewindetriebs (15) dem Zylinder (12) des Stoßdämpfers (11) zugeordnet sind.

5. Höhenverstellung nach den Ansprüchen 1 bis 4, **dadurch gekennzeichnet, dass** die Kappe (18),in ihrem Bodenteil eine mittige Öffnung (19) zur Durchführung des Kolbens (13) des Stoßdämpfers (11) sowie in ihrem Wandbereich ein als Muttergewinde dienendes Innengewinde (36) aufweist, das mit dem als Bolzengewinde (38) dienenden Außengewinde im zugewandten Endbereich des Zylinders(12) des Stoßdämpfers (11) korrespondiert.

6. Höhenverstellung nach den Ansprüchen 1 bis 5, **dadurch gekennzeichnet, dass** der Kugelgewindetrieb (15) mittels eines Stellergehäuses (26) auf dem Zylinder (12) des Stoßdämpfers (11) befestigt ist und gehäuseartige Fortsätze (30, 31) trägt zwecks Aufnahme von am Mutterteil (23) des Kugelgewindetriebs (15) angelenkten Dichtmanschetten (32, 33).

7. Höhenverstellung nach den Ansprüchen 1 bis 6, **dadurch gekennzeichnet, dass** das Stellergehäuse (26) Lagerstellen (28, 29) für die drehbare Lagerung des Spindelteiles (24) des Kugelgewindetriebes (15) aufweist.

8. Höhenverstellung nach den Ansprüchen 1 bis 7, **dadurch gekennzeichnet, dass** die radseitige Stirnseite des Spindelteiles (24) des Kugelgewindetriebs (15) einen Zahnkranz (43) trägt, der mit dem Antriebsritzel (41) eines den Kugelgewindetrieb zugeordneten Antriebsmotors (16) in getrieblicher Verbindung steht.

9. Höhenverstellung nach den Ansprüchen 1 bis 8, **dadurch gekennzeichnet, dass** die Steigung des Kugelgewindetriebes (15) und die Steigung des Gewindeverbindung (36, 38) ein Verhältnis von 1 : 1 aufweisen.

10. Höhenverstellung nach den Ansprüchen 1 bis 8, **dadurch gekennzeichnet, dass** zur Erzielung von weiteren Effekten der Relativbewegungen von Dämpferklappe (18) und Verstellfederteller (21) die Steigungsverhältnisse von Kugelgewindetrieb und
Kappengewinde (36, 38) vom Verhältnis 1:1 abweichen.

## Claims

1. Height adjustment (10) on a wheel suspension for motor vehicles, comprising a shock absorber (11) having a piston rod (13), which shock absorber is operatively connected to the vehicle body, and to which shock absorber a helical spring (20) is coaxially assigned which is clamped between two spring plates (21, 22), the active distance between which can be changed and which determine the spring deflection and rebound path relative to a normal level, and comprising a stop buffer (44) which is assigned to the shock absorber (11), the body-side end of the shock absorber (11) being assigned a shock absorber cap (18) which influences the free spring path (s) of the helical spring (20) and which is configured to be adjustable at the same time as the adjustable spring plate (21), **characterised in that** the adjustable spring plate (21) is arranged so as to be adjustable by means of a motorised ball screw (15) and the shock absorber cap (18) is arranged so as to be adjustable by means of a threaded connection (36, 38) between a cylinder (12) of the shock absorber (11) and the cap (18), and the spring plate and the cap are operatively interconnected via a claw coupling (34, 35).

2. Height adjustment according to claim 1, **characterised in that** the claw coupling which is arranged between the cap (18) and the spindle part (24) of the ball screw (15) is configured as a pipe slot (35) in which the facing end of the spindle part (24) of the ball screw (15) engages, which end is configured as a ring web (34).

3. Height adjustment according to claims 1 and 2, **characterised in that** the stop buffer (44) is configured as an elastomeric additional spring which surrounds the piston rod (13) and which is held in a recess (46) of the stationary spring plate (22).

4. Height adjustment according to claims 1 to 3, **characterised in that** the adjustable spring plate (21) is assigned to the nut part (23) and the spindle part (24) of the ball screw (15) is assigned to the cylinder (12) of the shock absorber (11).

5. Height adjustment according to claims 1 to 4, **characterised in that** the cap (18) has, in the base part thereof, a central opening (19) for the piston (13) of the shock absorber (11) to pass through and, in the wall region thereof, an internal thread (36) which is used as a female thread and which corresponds to the external thread, used as a male thread (38), in the facing end region of the cylinder (12) of the shock absorber (11).

6. Height adjustment according to claims 1 to 5, **characterised in that** the ball screw (15) is attached by means of an actuator housing (26) to the cylinder (12) of the shock absorber (11) and bears housing-like extensions (30, 31) for the purpose of holding sealing collars (32, 33) which are coupled to the nut part (23) of the ball screw (15).

7. Height adjustment according to claims 1 to 6, **characterised in that** the actuator housing (26) has bearing points (28, 29) for rotatably mounting the spindle part (24) of the ball screw (15).

8. Height adjustment according to claims 1 to 7, **characterised in that** the wheel-side end face of the spindle part (24) of the ball screw (15) bears a gear ring (43) which is operatively connected to the drive pinion (41) of a drive motor (16) which is assigned to the ball screw.

9. Height adjustment according to claims 1 to 8, **characterised in that** the pitch of the ball screw (15) and the pitch of the threaded connection (36, 38) have a ratio of 1:1.

10. Height adjustment according to claims 1 to 8, **characterised in that** to achieve further effects of the relative movements of the absorber cap (18) and the adjustable spring plate (21), the pitch ratios of the ball screw and cap thread (36, 38) deviate from the ratio 1:1.

## Revendications

1. Réglage en hauteur (10) sur une suspension de roue de véhicule automobile, comprenant un amortisseur de chocs (11) présentant une tige de piston (13) et en liaison active avec sa carrosserie, auquel amortisseur est affecté coaxialement un ressort à boudin (20) qui est tendu entre deux coupelles de ressort (21, 22) déterminant la course de compression et la course de détente par rapport à un niveau normal et dont la distance active peut être modifiée, et un tampon de butée (44) affecté à l'amortisseur de chocs (11), dans lequel l'extrémité côté carrosserie de l'amortisseur de chocs (11) est affectée à un chapeau d'amortisseur de chocs (18) influençant la course libre (s) du ressort à boudin (20), lequel chapeau est conformé de manière à pouvoir se déplacer simultanément avec la coupelle de ressort réglable (21), **caractérisé en ce que** la coupelle de ressort réglable (21) au moyen d'une vis d'entraînement à billes (15) entraîné par un moteur et le chapeau d'amortisseur de chocs (18) au moyen d'un assemblage par filetage (36, 38) sont agencés de manière à pouvoir se déplacer entre un cylindre (12) de l'amortisseur de chocs (11) et le chapeau (18) et sont reliés l'un à l'autre via un accouplement à griffes (34, 35) de manière déplaçable.

2. Réglage en hauteur selon la revendication 1, **caractérisé en ce que** l'accouplement à griffes aménagé entre le chapeau (18) et la partie de broche (24) de la vis d'entraînement à billes (15) se présente sous la forme d'une rainure pour tuyaux (35), dans laquelle l'extrémité dédiée, conformée en listel de piston (34), de la partie de broche (24) de la vis d'entraînement à billes (15) s'engage.

3. Réglage en hauteur selon les revendications 1 et 2, **caractérisé en ce que** le tampon de butée (44) se présente sous la forme d'un ressort d'appoint élastomère entourant la tige de piston (13), lequel ressort est maintenu dans un évidement (46) de la coupelle de ressort fixe (22).

4. Réglage en hauteur selon les revendications 1 à 3, **caractérisé en ce que** la coupelle de ressort réglable (21) est affectée à la partie d'écrou (23) et la partie de broche (24) de la vis d'entraînement à billes (15) au cylindre (12) de l'amortisseur de chocs (11).

5. Réglage en hauteur selon les revendications 1 à 4, **caractérisé en ce que** le chapeau (18) présente dans sa partie de fond une ouverture centrale (19) pour le passage du piston (13) de l'amortisseur de chocs (11) ainsi que, dans sa partie de paroi, un filet interne (36) servant de filet femelle, lequel filet interne correspond au filet externe servant de filet mâle (38) dans la zone d'extrémité dédiée du cylindre (12) de l'amortisseur de chocs (11).

6. Réglage en hauteur selon les revendications 1 à 5, **caractérisé en ce que** la vis d'entraînement à billes (15) est fixée sur le cylindre (12) de l'amortisseur de chocs (11) via un logement d'actionneur (26) et porte des prolongements (30, 31) en forme de logement pour recevoir des garnitures étanches (32, 33) articulées sur la partie d'écrou (23) de la vis d'entraînement à billes (15).

7. Réglage en hauteur selon les revendications 1 à 6, **caractérisé en ce que** le logement d'actionneur (26) présente des points d'appui (28, 29) pour le montage à rotation de la partie de broche (24) de la vis d'entraînement à billes (15).

8. Réglage en hauteur selon les revendications 1 à 7, **caractérisé en ce que** le côté frontal côté roue de la partie de broche (24) de la vis d'entraînement à billes (15) porte une couronne dentée (43) qui est en liaison motrice avec le pignon menant (41) d'un moteur d'entraînement (16) affecté à la vis d'entraînement à billes.

9. Réglage en hauteur selon les revendications 1 à 8, **caractérisé en ce que** le pas de la vis d'entraînement à billes (15) et le pas de l'assemblage par filetage (36, 38) présentent un rapport de 1:1.

10. Réglage en hauteur selon les revendications 1 à 8, **caractérisé en ce que**, pour obtenir d'autres effets des mouvements relatifs du chapeau d'amortisseur (18) et de la coupelle de ressort réglable (21), les rapports de pas de la vis d'entraînement à billes et du filet de chapeau (36, 38) s'écartent du rapport 1:1.
